# EUROPEAN PATENT APPLICATION

(11) **EP 3 907 694 A1**
(43) Date of publication of application: **10.11.2021**
(21) Application number: 21170904.3
(22) Date of filing: 28.04.2021
(51) Int. Cl.: G06T 1/20

(54) **METHOD AND SYSTEM FOR JOINT OPTIMIZATION OF ISP AND VISION TASKS, MEDIUM AND ELECTRONIC DEVICE**

(30) Priority: 08.05.2020 US 202063022037 P
(71) Applicant: Research Institute Of Tsinghua University in Shenzhen, 518057 Shenzhen (CN)
(72) Inventor: HAN, Yuxing, Shenzhen 518057 (CN); WEN, Jiangtao, Shenzhen 518057 (CN); GUO, Bichuan, Shenzhen 518057 (CN)
(74) Representative: Prüfer & Partner mbB Patentanwälte · Rechtsanwälte

(57) **Abstract**

The present disclosure relates to a method and a system for joint optimization of an ISP and vision tasks, a medium and an electronic device, which belong to the field of image processing and can effectively avoid the over-fitting of joint optimization of the ISP and the vision tasks. The method for joint optimization of the ISP and the vision tasks comprises the following steps: performing image signal processing on raw image dataset by an ISP to obtain processed image dataset; measuring probability gradient of the processed image dataset in prior distribution of traditional image dataset by a measurement module; and performing vision tasks on the processed image dataset by using a loss function with the probability gradient as a regularization term via a neural network.

## Description

### FIELD OF THE INVENTION

The present disclosure relates to the field of image processing, in particular to a method and a system for joint optimization of an ISP and vision tasks, a medium and an electronic device.

### BACKGROUND

Existing computer vision systems usually comprise image sensor, image signal processor (ISP), compression/decompression module, and computer vision related modules. The image sensor and the ISP are usually designed independently of back-end computer vision tasks. Namely, the ISP can perform image signal processing operations and the corresponding inverse operations, and then is connected with neural networks trained for specific vision tasks (such as detection, tracking and recognition), so as to realize end-to-end training and inference for learning from raw images with low latency, low cost and low power. However, such joint optimization is prone to over-fitting, especially because the scale of raw image datasets is usually smaller than that of traditional image dataset.

### SUMMARY

The purpose of the present disclosure is to provide a method and a system for joint optimization of an ISP and vision tasks, a medium and an electronic device, which can effectively avoid the over-fitting of joint optimization of the ISP and the vision tasks.

According to a first embodiment of the present disclosure, a method for joint optimization of an ISP and vision tasks is provided, wherein the method comprises the following steps: performing image signal processing on raw image dataset by an ISP to obtain processed image dataset; measuring probability gradient of the processed image dataset in prior distribution of traditional image dataset by a measurement module; and performing vision tasks on the processed image dataset by using a loss function with the probability gradient as a regularization term via a neural network.

According to a second embodiment of the present disclosure, a system for joint optimization of an ISP and vision tasks is provided, wherein the system comprises: an ISP for performing image signal processing on raw image dataset to obtain processed image dataset; a measurement module for measuring probability gradient of the processed image dataset in prior distribution of traditional image dataset; and a neural network for performing vision tasks on the processed image dataset by using a loss function with the probability gradient as a regularization term.

According to a third embodiment of the present disclosure, a computer readable storage medium is provided, wherein a computer program is stored in the computer readable storage medium; and when the computer program is executed by a processor, the steps of the method according to the first embodiment of the present disclosure are implemented.

According to a fourth embodiment of the present disclosure, an electronic device is provided, wherein the electronic device comprises: a memory on which a computer program is stored; and a processor for executing the computer program in the memory to implement the steps of the method according to the first embodiment of the present disclosure.

By adopting the above technical solutions, the ISP performs image signal processing on the raw image dataset to obtain the processed image dataset, the measurement module measures the probability gradient of the processed image dataset in the prior distribution of the traditional image dataset, and the neural network performs vision tasks on the processed image dataset by using a loss function with the probability gradient as a regularization term, therefore, the probability gradient can be used to judge whether the output of the ISP is close to the prior distribution of the traditional image datasets when a large-scale traditional image dataset can be used, thereby regularizing the output of the ISP, avoiding the over-fitting of joint optimization of the ISP and the vision tasks, enabling the ISP and the neural network for specific vision tasks to learn reasonable semantics, ensuring that the ISP and a vision task network (i.e., the neural network) achieve high performance, and also making the output of the ISP follow the prior distribution of the traditional image datasets, so that the ISP obtained by joint training can be extended to other vision tasks.

Other features and advantages of the present disclosure will be described in detail in the subsequent detailed description.

### BRIEF DESCRIPTION OF THE FIGURES

The accompanying drawings are used for providing a further understanding of the present disclosure, constituting a part of the specification, and illustrating the present disclosure together with the following detailed description, rather than constituting a limitation of the present disclosure. In the accompanying drawings,
Fig. 1 is a flow chart of a method for joint optimization of an ISP and vision tasks according to an embodiment of the present disclosure.
Fig. 2 is a schematic block diagram of a system for joint optimization of an ISP and vision tasks according to an embodiment of the present disclosure.
Fig. 3 is a block diagram of an electronic device according to an exemplary embodiment.

### DETAILED DESCRIPTION OF THE INVENTION

Specific embodiments of the present disclosure will be described in detail in combination with the accompanying drawings. It should be understood that the specific embodiments described herein are used for only illustrating and explaining the present disclosure, rather than limiting the present disclosure.

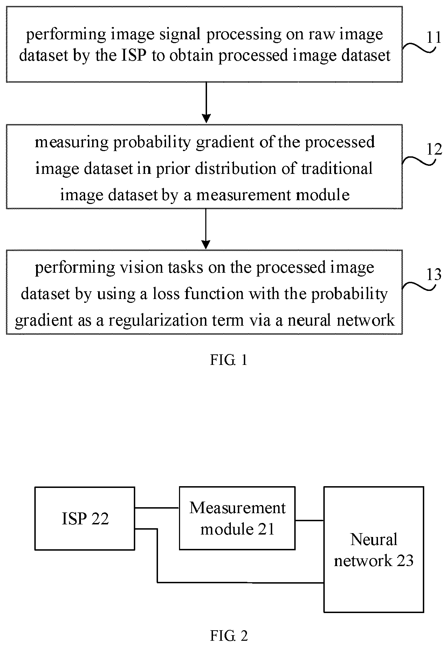

Fig. 1 is a flow chart of a method for joint optimization of an ISP and vision tasks according to an embodiment of the present disclosure. As shown in Fig. 1, the method comprises the following steps S11-S13.

In step S11, an ISP performs image signal processing on raw image dataset to obtain processed image dataset.

The raw image dataset refers to a dataset composed of raw images acquired by an image sensor. The image sensor may be a traditional image sensor, which is typically based on CMOS active sensor technology, and may also be an untraditional image sensor, such as a single photon avalanche diode (SPAD) image sensor.

The ISP can be embedded into the image sensor, or can operates as a separate chip.

The image signal processing of the ISP may include one or more of demosaicing, white balance, color correction, gamma correction, etc. The demosaicing can be implemented by bilinear interpolation or trilinear interpolation. The white balance can be implemented by linear scaling of each color channel. The color correction and the gamma correction refer to the nonlinear transformations of individual pixel values.

The image signal processing can be implemented by a filter-based method. Certainly, the image signal processing operations and the corresponding inverse operations thereof can also be implemented by a single-layer neural network.

The processed image dataset obtained by image signal processing can be transferred to the neural network trained for specific vision tasks, so that the end-to-end training and inference for learning from raw images can be achieved at low latency, low cost and low power. In addition, the raw image dataset for specific vision tasks is processed by a specific ISP algorithm, to reduce the number of neural network layers for the specific vision tasks and the calculation costs.

In the present disclosure, the vision task may be at least one of detection, recognition, tracking, etc.

In step S12, a measurement module measures probability gradient of the processed image dataset in prior distribution of traditional image dataset.

The traditional image dataset refers to a dataset composed of images acquired by the traditional image sensor.

The measurement module may be a trained de-noising autoencoder. For example, the measurement module may be a de-noising autoencoder trained with Gaussian noise. The de-noising autoencoder may be trained by a deep learning method. In this way, the output of the ISP can be regularized by combining deep learning with prior knowledge.

The probability gradient may be an L2 norm of the difference between the input (i.e., the processed image dataset) and the output of the trained de-noising autoencoder.

In step S13, the neural network performs vision tasks on the processed image dataset by using a loss function with the probability gradient as a regularization term.

By adopting the above technical solution, the following beneficial effects can be achieved:
(1) An image signal processing function is embedded in the end-to-end training and optimization, so the number and type of the acquired vision data will also be optimized inherently, thereby reducing the information loss caused by decoupling during the image signal processing.
(2) The neural network performs the vision tasks on the processed image dataset by using the loss function with the probability gradient of the processed image dataset in the prior distribution of the traditional image dataset as the regularization term, so the probability gradient can be used to judge whether the output of the ISP is close to the prior distribution of the traditional image dataset when a large-scale traditional image dataset can be used, thereby regularizing the output of the ISP, avoiding the over-fitting of joint optimization of the ISP and the vision tasks, enabling the ISP and the neural network for the specific vision tasks to learn reasonable semantics, ensuring that the ISP and a vision task network (i.e., the neural network) achieve high performance, and also making the output of the ISP follow the prior distribution of the traditional image dataset, so that the ISP obtained by joint training can be extended to other vision tasks.
(3) The performance of the ISP algorithm can be improved by the method for joint optimization according to the present application when the untraditional image dataset (such as the SPAD image dataset) is adopted without perfect ISP algorithm, or the ISP algorithm is not corrected correctly.
(4) Compared with ordinary deep learning methods, the method for joint optimization according to the embodiments of the present disclosure can achieve the same performance with low-resolution images. However, the ordinary deep learning methods require higher image resolution to run normally.

In some embodiments, an independent verification set can also be used for regularizing the output of the ISP. Namely, besides the de-noising autoencoder is used for characterizing the data distribution of the traditional image dataset, the verification set containing the traditional image dataset can also be used for directly characterizing the data distribution of the traditional image dataset. Namely, the performance of the trained vision task network can be evaluated by applying the verification set to the trained vision task network. Such a configuration can be adopted to control the early stopping of the training and avoid the over-fitting of joint optimization of the ISP and the vision tasks.

In some embodiments, the method for joint optimization according to the present disclosure can also comprise a step of alternately training and fixing the ISP and the neural network. Namely, when the ISP is trained, the neural network for the specific vision tasks keeps a fixed state without training. Then, after a certain period of time, the ISP stops training, keeps the fixed state, and the neural network for the specific vision tasks starts to be trained. The above processes are alternated in this way until convergence. Moreover, before training and fixing alternately, the neural network can be pre-trained by a small number of traditional image dataset to initialize the neural network for the specific vision tasks. The ISP and the neural network for the specific vision tasks can be trained and fixed alternately to avoid the over-fitting of the joint optimization of the ISP and the neural network for the specific vision tasks, and ensure that the ISP network and the vision task network can achieve high performance.

In addition, it should be noted that the technical solution of alternately training and fixing the ISP and the neural network for the specific vision tasks and the technical solution of using the loss function with the probability gradient as the regularization term by the neural network can be executed independently or in combination with each other. Namely, when the neural network uses the loss function without using the probability gradient as the regularization term, i.e., just a traditional loss function, the ISP and the neural network for the specific vision tasks are only trained and fixed alternately to avoid the over-fitting of joint optimization and ensure that the ISP network and the vision task network achieve high performance.

In some embodiments, the vision task comprises a plurality of sub-vision tasks; the loss function comprises a plurality of sub-loss functions; and the plurality of sub-vision tasks correspond to the plurality of sub-loss functions one by one, so the method for joint optimization according to the embodiments of the present disclosure may also comprises a step of aggregating loss results of the plurality of sub-loss functions.

Take vision tasks including detection tasks and recognition tasks as examples. After the raw image dataset passes through the ISP, the output of the ISP is transferred to both a detection neural network performing the detection task and a recognition neural network performing the recognition task; then, the detection neural network will calculate the loss with the corresponding loss function, the recognition neural network will calculate the loss with the corresponding loss function; and then the losses calculated by the detection neural network and the recognition neural network are aggregated (for example, weighted). Therefore, the output of the ISP should adapt to a plurality of vision tasks at the same time, so the over-fitting of the specific vision tasks becomes more difficult, i.e., the over-fitting of joint optimization of the ISP and the neural network for specific vision tasks is avoided, and high performance of the ISP and the vision task network are ensured. Theoretically, the more the vision tasks with shared input, the lower the extent of over-fitting.

Fig. 2 is a schematic block diagram of a system for joint optimization of an ISP and vision tasks according to an embodiment of the present disclosure. As shown in Fig. 2, the system comprises: an ISP 22 for performing image signal processing on raw image dataset to obtain processed image dataset; a measurement module 21 for measuring probability gradient of the processed image dataset in prior distribution of traditional image dataset; and a neural network 23 for performing vision tasks on the processed image dataset by using a loss function with the probability gradient as a regularization term.

By adopting the above technical solution, the following beneficial effects can be achieved:
(1) An image signal processing function is embedded in the end-to-end training and optimization, so the number and type of the acquired vision data will also be optimized inherently, thereby reducing the information loss caused by decoupling during the image signal processing.
(2) The neural network performs the vision tasks on the processed image dataset by using the loss function with the probability gradient of the processed image dataset in the prior distribution of the traditional image dataset as the regularization term, so the probability gradient can be used to judge whether the output of the ISP is close to the prior distribution of the traditional image datasets when a large scale of traditional image datasets can be used, thereby regularizing the output of the ISP, avoiding the over-fitting of joint optimization of the ISP and the vision tasks, enabling the ISP and the neural network for the specific vision tasks to learn reasonable semantics, ensuring that the ISP and a vision task network achieve high performance, and also making the output of the ISP follow the prior distribution of the traditional image datasets, so that the ISP obtained by joint training can be extended to other vision tasks.
(3) The performance of the ISP algorithm can be improved by the method for joint optimization according to the present application when the untraditional image dataset (such as the SPAD image dataset) is adopted without perfect ISP algorithm, or the ISP algorithm is not corrected correctly.
(4) Compared with ordinary deep learning methods, the method for joint optimization according to the embodiments of the present disclosure can achieve the same performance with low-resolution images. However, the ordinary deep learning methods require higher image resolution to run normally.

Optionally, the measurement module 21 is a trained de-noising autoencoder.

Optionally, the measurement module 21 is a de-noising autoencoder trained with Gaussian noise.

Optionally, the probability gradient is an L2 norm of the difference between the input and the output of the trained de-noising autoencoder.

Optionally, the ISP 22 and the neural network 23 are trained and fixed alternately.

Optionally, the neural network 23 is also pre-trained through the traditional image dataset before being trained and fixed alternately.

Optionally, the vision task comprises a plurality of sub-vision tasks; the loss function comprises a plurality of sub-loss functions; and the plurality of sub-vision tasks correspond to the plurality of sub-loss functions one by one, so the neural network 23 is also used for aggregating loss results of the plurality of sub-loss functions.

For apparatuses in the above embodiment, the specific ways in which each module performs operations are described in detail in the embodiment related to the method, and will not be described in detail here.

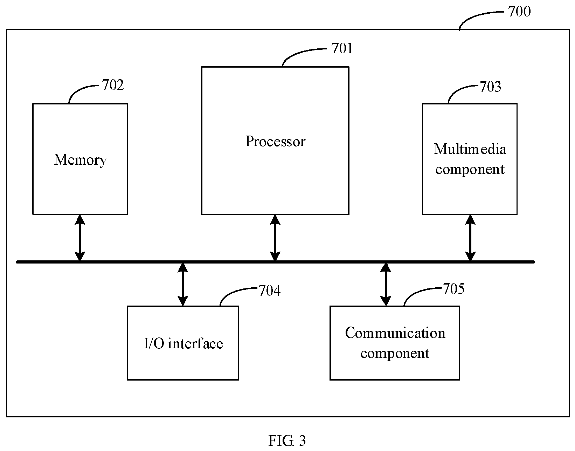

Fig. 3 is a block diagram of an electronic device 700 according to an exemplary embodiment. As shown in Fig. 3, the electronic device 700 may comprise a processor 701 and a memory 702. The electronic device 700 may also comprise one or more of a multimedia component 703, an input/output (I/O) interface 704, and a communication component 705.

The processor 701 is used for controlling the overall operation of the electronic device 700 to complete all or part of the steps in the above method for joint optimization. The memory 702 is used for storing various types of data to support the operations on the electronic device 700. The data, for example, may comprise instructions of any application program or method for operating on the electronic device 700, and application-related data, such as contact data, messages sent and received, pictures, audio, and video. The memory 702 can be implemented by any type of volatile or nonvolatile memory device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or a compact disk (CD). The multimedia component 703 may comprise a screen and an audio component, in which the screen may be a touch screen; and the audio component is used for outputting and/or inputting audio signals. For example, the audio component may comprise a microphone for receiving external audio signals. The received audio signals can be further stored in the memory 702 or sent by the communication component 705. The audio component also comprises at least one loudspeaker for outputting audio signals. The I/O interface 704 provides an interface between processor 701 and other interface modules, such as keyboards, mice and buttons. The buttons may be virtual buttons or physical buttons. The communication component 705 is used for the wired or wireless communication between the electronic device 700 and other devices. The wireless communication may be Wi-Fi, Bluetooth, near field communication (NFC), 2G, 3G or 4G, or a combination of one or more of them. Therefore, the corresponding communication component 705 may comprise a Wi-Fi module, a Bluetooth module and an NFC module.

In an exemplary embodiment, the electronic device 700 may be implemented by one or more application specific integrated circuits (ASICs), digital signal processor (DSPs), digital signal processing devices (DSPDs), programmable logic devices (PLDs), field programmable gate arrays (FPGA), controllers, microcontrollers, microprocessors or other electronic components, is used for implementing the above method for joint optimization.

In another exemplary embodiment, a computer-readable storage medium comprising program instructions is provided. When the program instructions are executed, the steps of the above method for joint optimization are implemented. For example, the computer-readable storage medium may be the memory 702 comprising the program instructions; and the program instructions can be executed by the processor 701 of the electronic device 700 to complete the above method for joint optimization.

The preferred embodiments of the present disclosure are described in detail above in combination with the accompanying drawings. However, the present disclosure is not limited to the specific details of the above embodiments. Various simple modifications can be performed on the technical solutions of the present disclosure within the scope of technical concept of the present disclosure. The simple modifications should all fall within the protection scope of the present disclosure.

In addition, it should be noted that the specific technical features described in the above specific embodiments can be combined in any suitable way in the case of no contradiction. To avoid unnecessary repetition, various possible combinations are not described separately in the present disclosure.

In addition, various different embodiments of the present disclosure can also be combined freely; and the combinations should also be regarded as the contents disclosed by the present disclosure as long as they do not violate the idea of the present disclosure.

## Claims

1. A method for joint optimization of an image signal processor (ISP) and vision tasks, comprising:
performing image signal processing on raw image dataset by the ISP to obtain processed image dataset;
measuring probability gradient of the processed image dataset in prior distribution of traditional image dataset by a measurement module; and
performing vision tasks on the processed image dataset by using a loss function with the probability gradient as a regularization term via a neural network.

2. The method according to claim 1, wherein the measurement module is a trained de-noising autoencoder.

3. The method according to claim 1, wherein the measurement module is a de-noising autoencoder trained with Gaussian noise.

4. The method according to claim 2, wherein the probability gradient is an L2 norm of the difference between the input and the output of the trained de-noising autoencoder.

5. The method according to any one of claims 1-4, wherein the method also comprises: alternately training and fixing the ISP and the neural network.

6. The method according to claim 5, wherein the method also comprises: pre-training the neural network through the traditional image dataset before alternately training and fixing.

7. The method according to any one of claims 1-6, wherein the vision task comprises a plurality of sub-vision tasks, the loss function comprises a plurality of sub-loss functions, the plurality of sub-vision tasks correspond to the plurality of sub-loss functions one by one; the method also comprises:
aggregating loss results of the plurality of sub-loss functions.

8. A system for joint optimization of an image signal processor (ISP) and vision tasks, comprising:
an ISP for performing image signal processing on raw image dataset to obtain processed image dataset;
a measurement module for measuring probability gradient of the processed image dataset in prior distribution of traditional image dataset; and
a neural network for performing vision tasks on the processed image dataset by using a loss function with the probability gradient as a regularization term.

9. The system according to claim 8, wherein the measurement module is a trained de-noising autoencoder.

10. The system according to claim 9, wherein the probability gradient is an L2 norm of the difference between the input and the output of the trained de-noising autoencoder.

11. The system according to any one of claims 8-10, wherein the ISP and the neural network are obtained by alternately training and fixing.

12. The system according to any one of claims 8-11, wherein the vision task comprises a plurality of sub-vision tasks, the loss function comprises a plurality of sub-loss functions, the plurality of sub-vision tasks correspond to the plurality of sub-loss functions one by one; the neural network is further configured to aggregate loss results of the plurality of sub-loss functions.

13. A non-transitory computer readable storage medium, which stores a computer program, wherein when the computer program is executed by a processor, the steps of the method according to any one of claims 1-7 is implemented.

14. A computer program product, wherein the computer program product comprises a computer program executable by a programmable device, and the computer program comprises a code portion for performing the method according to any of claims 1 to 7 when executed by the programmable device.

15. An electronic device, comprising:
a memory on which a computer program is stored; and
a processor for executing the computer program in the memory to implement the steps of the method according to any one of claims 1-7.
